(19) Europäisches Patentamt / European Patent Office / Office européen des brevets

(11) **EP 2 753 067 A1**

(12) **EUROPEAN PATENT APPLICATION**

(43) Date of publication:
**09.07.2014 Bulletin 2014/28**

(51) Int Cl.:
*H04N 5/235* (2006.01)  *H04N 5/232* (2006.01)

(21) Application number: **13188376.1**

(22) Date of filing: **11.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.01.2013 KR 20130001216**

(71) Applicant: **Samsung Electronics Co., Ltd Gyeonggi-do 443-742 (KR)**

(72) Inventor: **Lee, Myung-hun Gyeonggi-do (KR)**

(74) Representative: **Tindall, Adam Appleyard Lees 15 Clare Road Halifax, Yorkshire HX1 2HY (GB)**

(54) **Digital photographing apparatus, method of controlling the same, and computer-readable recording medium**

(57)    A digital photographing apparatus is provided. The digital photographing apparatus includes a photographing unit that generates photographed images from incident light, a live view generator that generates a live view image from the photographed images, and a display unit that displays the live view image. The live view generator determines the number of real-time photographed images to be combined, according to a set exposure time. The live view generator combines the real-time photographed images of the determined number to generate the live view image. The live view generator combines latest real-time photographed images of the determined number to update the live view image whenever a real-time photographed image is input.

FIG. 11

**Description**

CROSS-REFERENCE TO RELATED PATENT APPLICATION

This application claims the priority benefit under 35 U.S.C. § 119(a) from Korean Patent Application No. 10-2013-0001216, filed January 4, 2013, in the Korean Intellectual Property Office, the disclosure of which is incorporated herein by reference in its entirety.

BACKGROUND

1. Field

Various embodiments of the invention relate to a digital photographing apparatus, a method of controlling the digital photographing apparatus, and a computer-readable recording medium having embodied thereon computer programs for executing the method of controlling the digital photographing apparatus.

2. Related Art

Recently, live view function has been widely used to show a user images available to be photographed. Live view images are generated by sensing imaging signals at a predetermined frame rate and displaying the imaging signals continuously on an imaging device. However, there is a limitation in reflecting photographing settings set by a user in the live view images.

SUMMARY

Various embodiments of the invention provide a digital photographing apparatus for reflecting exposure time in live view images.

According to an embodiment, a digital photographing apparatus includes a photographing unit that generates real-time photographed images from incident light, a live view generator that generates a live view image from the real-time photographed images, and a display unit that displays the live view image. The live view generator determines the number of real-time photographed images to be combined, according to a set exposure time. The live view generator combines the real-time photographed images of the determined number to generate the live view image. The live view generator combines latest real-time photographed images of the determined number to update the live view image whenever a real-time photographed image is input.

The live view generator may determine the number of real-time photographed images to be combined according to a frame rate of the live view image and the set exposure time.

The digital photographing apparatus may further include a real-time image storage unit that stores a plurality of latest real-time photographed images.

The live view generator may perform an average combination of the real-time photographed images of the determined number to generate the live view image.

The live view generator may update the number of real-time photographed images to be combined, when the set exposure time is changed.

The digital photographing apparatus may further include an optical view finder that provides real-time images of incident light that is incident through a lens, an aperture, and a mirror, in an optical preview mode. The live view generator may provide the live view image in an exposure preview mode.

The live view generator may combine real-time photographed images that are currently stored to generate the live view image when the number of stored real-time photographed images is less than the determined number. The live view generator may combine the stored real-time photographed images to update the live view image whenever the real-time photographed image is input, until the number of stored real-time photographed images reaches the determined number.

According to another embodiment, a method of controlling a digital photographing apparatus includes determining a number of real-time photographed images to be combined, according to a set exposure time; generating a live view image by combining the real-time photographed images of the determined number; and updating the live view image by combining latest real-time photographed images of the determined number, whenever the real-time photographed image is input.

The determining of the number of real-time photographed images to be combined may be performed according to a frame rate of the live view and the set exposure time.

The method may further include storing a plurality of latest real-time photographed images.

The generating of the live view image may include performing an average combination of the real-time photographed images of the determined number.

The method may further include updating the number of real-time photographed images to be combined, when the set exposure time is changed.

The method may further include: providing real-time images generated from incident light that is incident through a lens, an aperture, and a mirror on an optical view finder, in an optical preview mode; and providing the live view image in an exposure preview mode.

The method may further include: generating the live view image by combining the real-time photographed images currently stored, if the number of the stored real-time photographed images is less than the determined number; and updating the live view image by combining the stored real-time photographed images whenever a real-time photographed image is input, until the number of stored real-time photographed images reaches the determined number.

According to another embodiment, a non-transitory computer-readable recording medium has embodied thereon computer program codes for executing a method of controlling a digital photographing apparatus when being read and performed by a processor. The method includes determining a number of real-time photographed images to be combined, according to a set exposure time; generating a live view image by combining the real-time photographed images of the determined number; and updating the live view image by combining latest real-time photographed images of the determined number, whenever a real-time photographed image is input.

The determining of the number of real-time photographed images to be combined may be performed according to a frame rate of the live view image and the set exposure time.

The method may further include storing a plurality of latest real-time photographed images.

The generating of the live view image may include performing an average combination of the real-time photographed images of the determined number.

The method may further include updating the number of real-time photographed images to be combined, when the set exposure time is changed.

The method may further include: providing real-time images generated from incident light that is incident through a lens, an aperture, and a mirror on an optical view finder, in an optical preview mode; and providing the live view image in an exposure preview mode.

BRIEF DESCRIPTION OF THE DRAWINGS

The above and other features and advantages of the invention will become more apparent by describing in detail exemplary embodiments thereof with reference to the attached drawings in which:

FIG. 1 is a block diagram of a digital photographing apparatus according to an embodiment;
FIG. 2 is a diagram illustrating a method of generating a live view image according to an embodiment;
FIG. 3 is a block diagram of a digital photographing apparatus according to another embodiment;
FIG. 4 is a block diagram of a digital photographing apparatus according to another embodiment;
FIG. 5 is a flowchart illustrating a method of controlling a digital photographing apparatus, according to an embodiment;
FIG. 6 is a flowchart illustrating a method of controlling a digital photographing apparatus, according to another embodiment;
FIG. 7 is a diagram showing a live view image to which embodiments of the invention are not applied;
FIG. 8 is a diagram showing a live view image to which embodiments of the invention are applied;
FIG. 9 is a diagram showing a live view image to which embodiments of the invention are not applied;
FIG. 10 is a diagram showing a live view image to which embodiments of the invention are applied; and
FIG. 11 is a diagram illustrating a digital photographing apparatus, according to another embodiment.

DETAILED DESCRIPTION

The following description and the attached drawings are provided for better understanding of the embodiments, and descriptions of techniques or structures related to the embodiments which would be obvious to one of ordinary skill in the art will be omitted.

Various embodiments will now be described more fully with reference to the accompanying drawings, in which exemplary embodiments of the invention are shown. The invention may be embodied in many different forms and should not be construed as being limited to the embodiments set forth herein; rather, these embodiments are provided so that this disclosure will be thorough and complete, and will fully convey the concept of the invention to those of ordinary skill in the art.

Hereinafter, embodiments of the invention will be described below with reference to accompanying drawings.

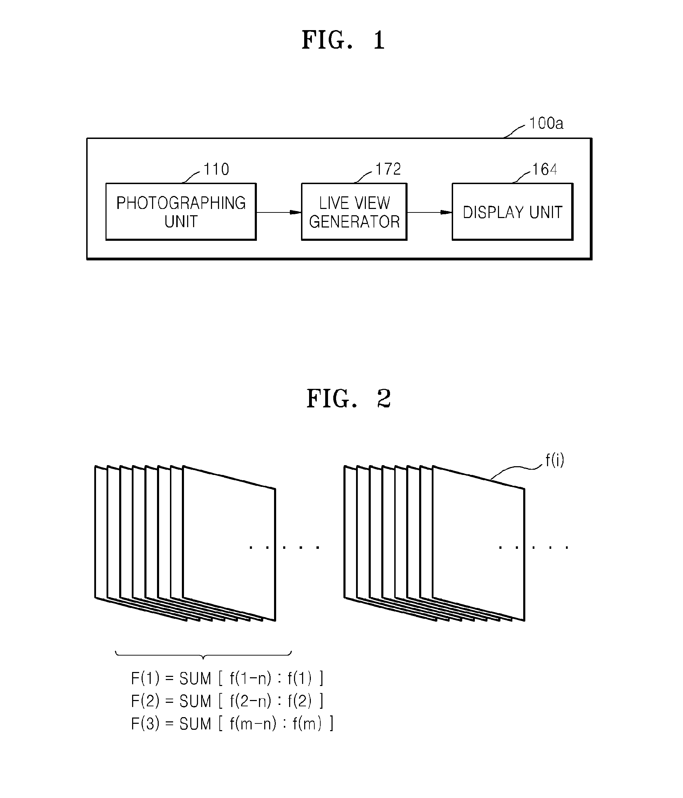

FIG. 1 is a block diagram showing a digital photographing apparatus 100a according to an embodiment.

The digital photographing apparatus 100a of the present embodiment includes a photographing unit 110, a live view generator 172, and a display unit 164. The photographing unit 110 includes a lens, an aperture, and an imaging device, and captures incident light and performs a photoelectric conversion to generate imaging signals. The imaging signals are provided to the live view generator 172 as photographed images.

The live view generator 172 generates live view images by using the photographed images photographed by the photographing unit 110. Since the photographed images input into the live view generator 172 are input in real-time, the photographed images may be referred to as real-time photographed images. The real-time photographed image may be input to the live view generator 172 directly or via a memory.

The live view generator 172 of the present embodiment combines one or more real-time photographed images to generate a live view image. First, the live view generator 172 determines the number of real-time photographed images to be combined according to an exposure time that is currently set.

According to an embodiment, the number of real-time photographed images to be combined may be determined by multiplying a frame rate of the live view image by the set exposure time. For example, if a frame rate of the live view image is 60 fps (frame/sec) and the set exposure time is 1 second, the number of real-time photographed images to be combined may be determined by following equation 1.

$$\text{The number of real-time photographed images to be combined} = 60\text{fps} \times 1\text{sec} = 60 \text{ frames} \quad \text{-------------------------------------------------------------------- (1)}$$

If the number of real-time photographed images to be combined is calculated as 1 or less, the real-time photographed images may be displayed as the live view images in the photographing order without being combined.

According to an embodiment, the live view generator 172 may change the number of real-time photographed images if the set exposure time is changed.

The live view generator 172 generates the live view images by combining the latest real-time photographed images by the determined number whenever the real-time photographed image is input from the photographing unit 110.

FIG. 2 is a diagram illustrating a method of generating the live view image according to an embodiment. In FIG. 2, f(i) denotes an i-th real-time photographed image (i is an integer), and F(1), F(2), and F(m) respectively denote first, second, and m-th live view images. Also, it is assumed that the number of real-time photographed images to be combined is n (n is a natural number).

When the first real-time photographed image f(1) is input, an average combination image of n real-time photographed images, that is, from a (1-n)th real-time photographed image f(1-n) to the first real-time photographed image f(1), is obtained to generate a live view image F(1). Next, when the second real-time photographed image f(2) is input, an average combination image of n latest real-time photographed images, that is, from (2-n)th real-time photographed image f(2-n) to the second real-time photographed image f(2), is obtained to generate a live view image F(2). According to the present embodiment, the live view image is generated whenever the real-time photographed image is input, and thus, the live view image to which an exposure time is applied in real-time may be provided.

The display unit 164 receives the live view image generated by the live view generator 172 to display the received live view image.

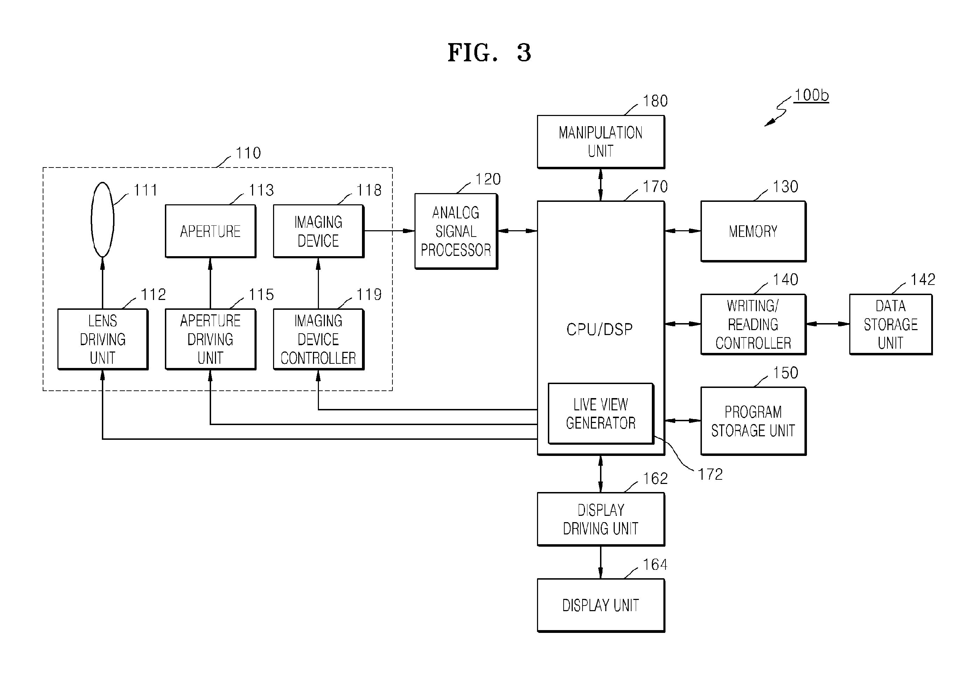

FIG. 3 is a block diagram of a digital photographing apparatus 100b according to another embodiment.

The digital photographing apparatus 100b of the present embodiment includes a photographing unit 110, an analog signal processor 120, a memory 130, a writing/reading controller 140, a data storage unit 142, a program storage unit 150, a display driving unit 162, a display unit 164, a central processing unit (CPU)/digital signal processor (DSP) 170, and a manipulation unit 180.

Overall operations of the digital photographing apparatus 100b are controlled by the CPU/DSP 170. The CPU/DSP 170 provides a lens driving unit 112, an aperture driving unit 115, and an imaging device controller 119 with control signals for operating each of the components.

The photographing unit 110 generates an electric signal image from incident light, and includes a lens 111, the lens driving unit 112, an aperture 113, the aperture driving unit 115, an imaging device 118, and the imaging device controller 119. The photographing unit 110 generates and outputs real-time photographed images.

The lens 111 may include a plurality of lens groups or a plurality of lenses. A location of the lens 111 is adjusted by the lens driving unit 112. The lens driving unit 112 adjusts the location of the lens 111 according to the control signal provided from the CPU/DSP 170.

An opening degree of the aperture 113 is adjusted by the aperture driving unit 115 so that an intensity of the light incident into the imaging device 118 may be adjusted.

An optical signal transmitting through the lens 111 and the aperture 113 focuses an image of a subject on a light receiving surface of the imaging device 118. The imaging device 118 may be a charge-coupled device (CCD) image sensor or a complementary metal oxide semiconductor (CMOS) image sensor that converts the optical signal into an electric signal. A sensitivity of the imaging device 118 may be adjusted by the imaging device controller 119. The imaging device controller 119 may control the imaging device 118 according to a control signal that is automatically generated by an image signal input in real-time or a control signal that is input manually by a manipulation of a user.

An exposure time of the imaging device 118 may be adjusted by using a shutter (not shown). The shutter (not shown) may be a mechanical shutter adjusting incident light by moving a blind or an electronic shutter adjusting exposure to the light by applying an electronic signal to the imaging device 118.

The analog signal processor 120 performs operations such as a noise reduction process, a gain adjustment process, a waveform regularization, and an analog-digital conversion process with respect to the analog signal provided from the imaging device 118.

The signal processed by the analog signal processor 120 may be input to the CPU/DSP 170 via the memory 130, or may be directly input to the CPU/DSP 170 without passing through the memory 130. Here, the memory 130 operates as a main memory of the digital photographing apparatus 100b, and temporarily stores information required during the operation of the CPU/DSP 170. The program storage unit 150 stores programs such as an operating system for driving the digital photographing apparatus 100b and application systems.

Moreover, the digital photographing apparatus 100b includes the display unit 164 for displaying operating states thereof or image information photographed by the digital photographing apparatus 100b. The display unit 164 may provide the user with visual information and/or audible information. The display unit 164 may be formed of a liquid crystal display (LCD) panel, an organic light emitting diode display panel, for example, in order to provide the visual information. Also, the display unit 164 may be a touch screen capable of sensing a touch input.

The display driving unit 162 provides the display unit 164 with a driving signal.

The CPU/DSP 170 processes input image signals, and accordingly, controls each of the components according to the processed image signal or an external input signal. The CPU/DSP 170 reduces noise in input image data, and may perform image signal processes for improving image quality such as gamma correction, color filter array interpolation, color matrix, color correction, and color enhancement. Also, the CPU/DSP 170 may generate an image file by compressing the image data generated through the image signal processes for improving the image quality, or may restore image data from the image file. The image data may be compressed in a reversible format or a non-reversible format. As an example of the compression format, still images may be compressed in joint photographic experts group (JPEG) format or JPEG 2000 format. In addition, if a moving picture is recorded, a plurality of frames may be compressed in a moving picture experts group (MPEG) standard to generate a moving picture file. The image file may be generated according to, for example, an exchangeable image file format (Exif) standard.

The CPU/DSP 170 according to the present embodiment may include the live view generator 172. The live view generator 172 of the present embodiment generates live view images reflecting the set exposure time by combining one or more real-time photographed images, as described above.

The image data or image file output from the CPU/DSP 170 is input to the writing/reading controller 140 via the memory 130 or directly, and the writing/reading controller 140 stores the image data or image file in the data storage unit 142 automatically or according to a signal input from the user. Also, the writing/reading controller 140 reads image data from the image file stored in the data storage unit 142, and may input the image data into the display driving unit 162 via the memory 130 or other passages so that the display unit 164 may display the image. The data storage unit 142 may be detachable, or may be permanently mounted in the digital photographing apparatus 100b.

Also, the CPU/DSP 170 may perform a coloring process, a blurring process, an edge emphasizing process, an image analyzing process, an image recognizing process, and an image effect process. Face recognition or scene recognition may be performed by using the image recognizing process. In addition, the CPU/DSP 170 may perform a display image signal process for displaying images on the display unit 164. For example, the CPU/DSP 170 may perform processes such as brightness level adjustment, color correction, contrast adjustment, contouring adjustment, screen partition, character image generation, and image combination. The CPU/DSP 170 is connected to an external monitor, and may perform predetermined image signal processes so as to display images on the external monitor. The processed image data may be transferred to be displayed on the external monitor.

Also, the CPU/DSP 170 may generate control signals for controlling the AF, zoom variation, focus variation, and automatic exposure adjustment by executing a program stored in the program storage unit 150 or by using an additional module, and may provide the aperture driving unit 115, the lens driving unit 112, and the imaging device controller 119 with the control signals. In addition, the CPU/DSP 170 may control overall operations of the components included in the digital photographing apparatus 100b such as the shutter or a strobe.

The user may input a control signal through the manipulation unit 180. The manipulation unit 180 may include various functional buttons such as a shutter-release button through which a shutter-release signal for exposing the imaging device 118 to the light for a predetermined time period to take a picture is input, a power button for inputting a signal controlling turning-on/turning-off of electric power, a zoom button for increasing or narrowing a viewing angle according to an input of the user, a mode selection button, and other photograph setting buttons. The manipulation unit 180 may be realized in any type of format, for example, buttons, a keyboard, a touch pad, a touch screen, or a remote controller, provided that the user may input the control signals therethrough.

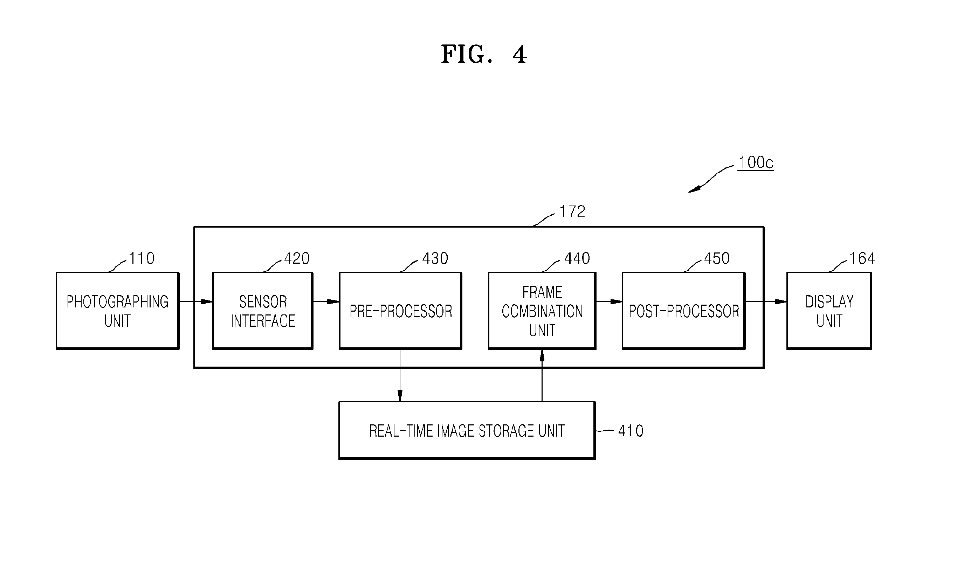

FIG. 4 is a block diagram of a digital photographing apparatus 100c according to another embodiment.

The digital photographing apparatus 100c according to the present embodiment includes the photographing unit 110, the live view generator 172, the display unit 164, and a real-time image storage unit 410.

The photographing unit 110 photoelectrically converts the incident light to generate real-time photographed images.

The live view generator 172 includes a sensor interface 420, a pre-processor 430, a frame combination unit 440, and a post-processor 450.

The sensor interface 420 reads real-time photographed images from the imaging device 118 (refer to FIG. 3) of the photographing unit 110 at a predetermined interval according to a frame rate. The pre-processor 430 performs pre-processes such as noise reduction with respect to the real-time photographed image. The real-time photographed image that is pre-processed by the pre-processor 430 is stored in the real-time image storage unit 410.

The real-time image storage unit 410 stores a predetermined number of real-time photographed images that are the latest. Whenever a new real-time photographed image is input to the real-time image storage unit 410, the oldest real-time photographed image may be automatically deleted from the real-time image storage unit 410.

The frame combination unit 440 calculates the number of real-time photographed images to be combined based on the set exposure time and the frame rate of the live view image, and combines one or more real-time photographed images. The frame combination unit 440 reads the real-time photographed images from the real-time image storage unit 410, and combines the determined number of real-time photographed images to generate the live view image.

According to the embodiment, if the number of real-time photographed images stored in the real-time image storage unit 410 is less than that of the real-time photographed images to be combined, the frame combination unit 440 combines the real-time photographed images currently stored in the real-time image storage unit 410 to generate the live view image, and updates the live view image whenever the real-time photographed image is input. Even if the number of the real-time photographed images stored in the real-time image storage unit 410 is less than that of the real-time photographed images to be combined, the user may see the live view image changing gradually according to the set exposure time by updating the live view image with only the real-time photographed images currently stored in the real-time image storage unit 410.

The post-processor 450 performs post-processes of the combined live view image such as an edge enhancement or color interpolation. The post-processor 450 outputs the post-processed live view image to the display unit 164.

The display unit 164 displays the live view image output from the live view generator 172.

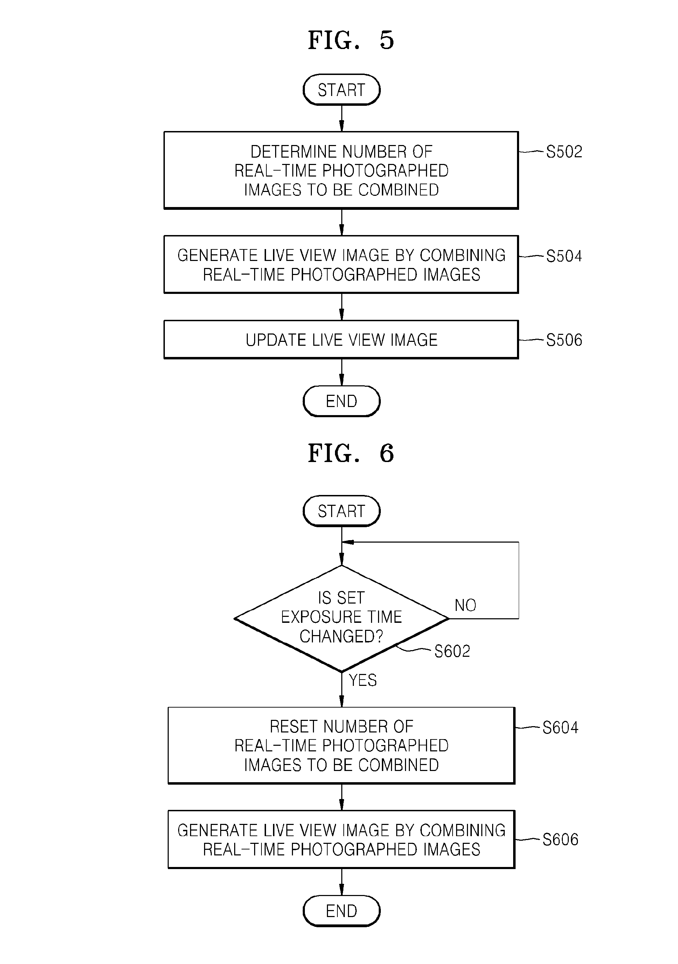

FIG. 5 is a flowchart illustrating a method of controlling a digital photographing apparatus according to an embodiment.

The digital photographing apparatus according to the present embodiment determines the number of real-time photographed images to be combined based on a set exposure time and a frame rate of the live view image (S502). Next, the digital photographing apparatus combines latest real-time photographed images of the determined number to generate the live view image (S504). Also, whenever a real-time photographed image is input, the digital photographing apparatus combines latest real-time photographed images of the determined number to update the live view image (S506).

FIG. 6 is a flowchart illustrating a method of controlling a digital photographing apparatus according to another embodiment.

According to the present embodiment, if the set exposure time is changed (S602), the digital photographing apparatus resets the number of real-time photographed images to be combined (S604), and then, the digital photographing apparatus combines the real-time photographed images to generate the live view image (S606).

The exposure time may be set directly by the user or may be automatically changed according to the photographing mode of the digital photographing apparatus 100a, 100b, or 100c. For example, if a program mode (P mode) or an aperture mode (A mode) is set, the user may observe a variation, due to the exposure time, in the live view image while directly adjusting the exposure time. If a shutter speed setting mode (S mode) or a manual mode (M mode) is set, the exposure time is changed corresponding to variation of a photograph setting such as shutter speed, whereas the user may not directly set the exposure time. Therefore, the user may observe the live view image reflecting the variation of the exposure time that is indirectly set.

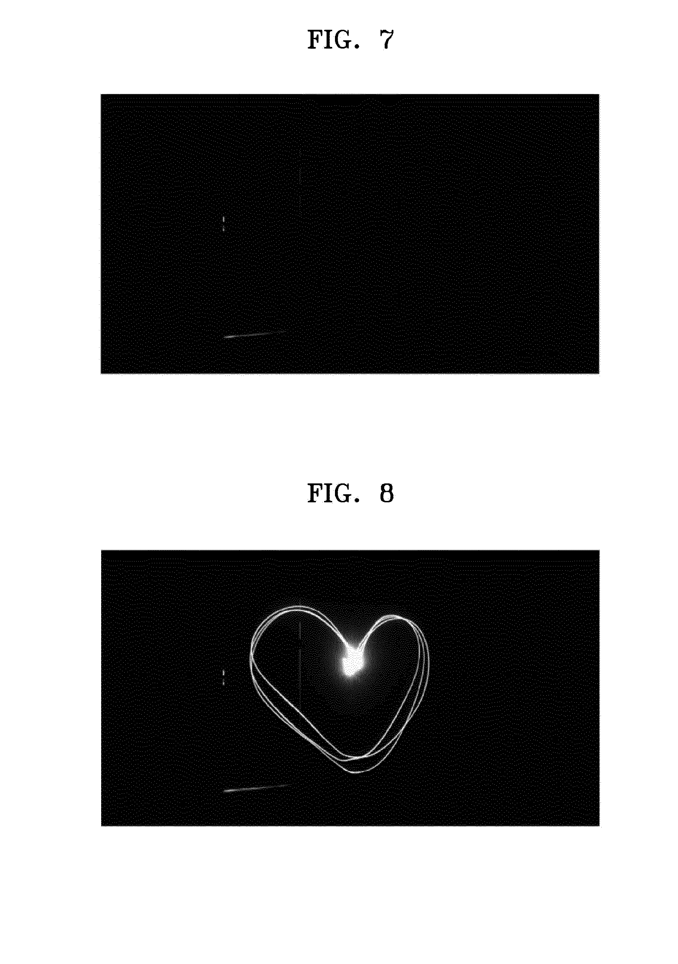

FIG. 7 shows a live view image to which embodiments of the invention are not applied, and FIG. 8 shows a live view image to which embodiments of the invention are applied.

As shown in FIG. 7, in the conventional live view image, the exposure time is not applied to the live view image even when long exposure time is set. However, according to the embodiments, as shown in FIG. 8, the live view image to which the exposure time is applied may be obtained. Therefore, the live view image according to the embodiments may show the user an optical path of the light.

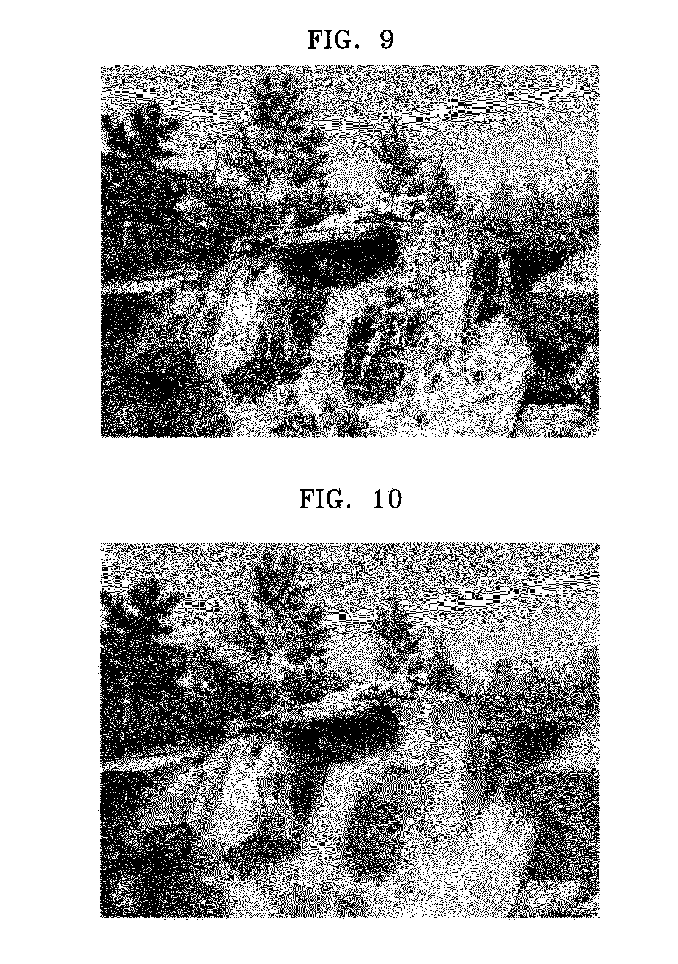

FIG. 9 shows a live view image to which the embodiments of the invention are not applied, and FIG. 10 shows a live view image to which the embodiments of the invention are applied.

The conventional live view image may not reflect the long exposure time as shown in FIG. 9; however, the live view image according to the embodiments may represent paths of water drops in a waterfall by applying the longer exposure time as shown in FIG. 10.

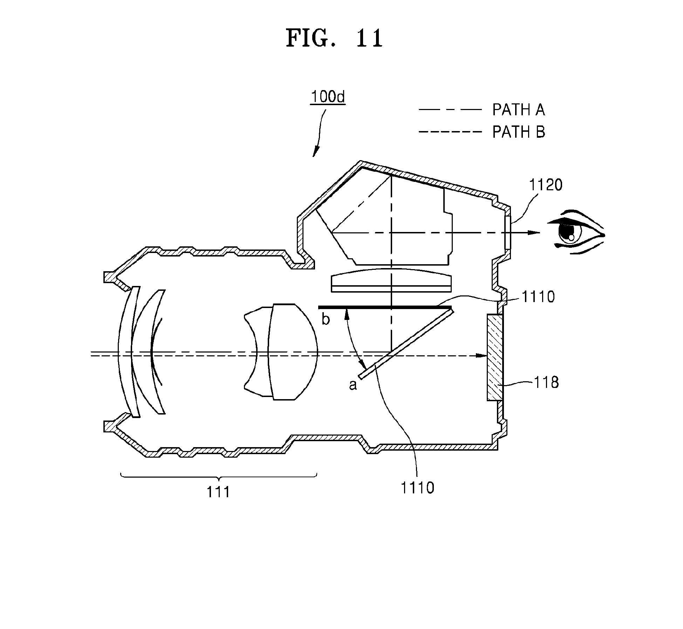

FIG. 11 is a diagram illustrating a digital photographing apparatus 100d according to another embodiment.

According to the present embodiment, in the digital photographing apparatus 100d including an optical view finder 1120, an image reflecting a depth and an image reflecting the exposure time may be shown through an optical view finder image and a live view image.

A user selects a mode, such as an optical preview mode, so that real-time images may be input through the optical view finder 1120, and thus, the user may see the real-time image reflecting the depth. In this case, a mirror 1110 is located at a location a, and incident light is incident to the optical view finder 1120 through an optical path A.

Also, the user may select a mode, such as an exposure preview mode, so as to display the live view image, and thus, may see the real-time photographed image reflecting the exposure time. In this case, the mirror 1110 is located at a location b, and the incident light is incident to an imaging device 118 through an optical path B so as to generate the live view image reflecting the exposure time.

According to the present embodiment, the user may observe the real-time image reflecting the depth or the real-time photographed image reflecting the exposure time, before performing a photographing operation.

According to the embodiments of the invention, the live view image may reflect the variation of the real-time image due to the exposure time.

The apparatus described herein may comprise a processor, a memory for storing program data to be executed by the processor, a permanent storage such as a disk drive, a communications port for handling communications with external devices, and user interface devices, including a display, touch panel, keys, buttons, etc. When software modules are involved, these software modules may be stored as program instructions or computer readable code executable by the processor on a non-transitory computer-readable media such as magnetic storage media (e.g., magnetic tapes, hard disks, floppy disks), optical recording media (e.g., CD-ROMs, Digital Versatile Discs (DVDs), etc.), and solid state memory (e.g., random-access memory (RAM), read-only memory (ROM), static random-access memory (SRAM), electrically erasable programmable read-only memory (EEPROM), flash memory, thumb drives, etc.). The computer readable recording media may also be distributed over network coupled computer systems so that the computer readable code is stored and executed in a distributed fashion. This computer readable recording media may be read by the computer, stored in the memory, and executed by the processor.

Also, using the disclosure herein, programmers of ordinary skill in the art to which the invention pertains may easily implement functional programs, codes, and code segments for making and using the invention.

All references, including publications, patent applications, and patents, cited herein are hereby incorporated by reference to the same extent as if each reference were individually and specifically indicated to be incorporated by reference and were set forth in its entirety herein.

For the purposes of promoting an understanding of the principles of the invention, reference has been made to the embodiments illustrated in the drawings, and specific language has been used to describe these embodiments. However, no limitation of the scope of the invention is intended by this specific language, and the invention should be construed to encompass all embodiments that would normally occur to one of ordinary skill in the art. The terminology used herein is for the purpose of describing the particular embodiments and is not intended to be limiting of exemplary embodiments of the invention. In the description of the embodiments, certain detailed explanations of related art are omitted when it is deemed that they may unnecessarily obscure the essence of the invention.

The invention may be described in terms of functional block components and various processing steps. Such functional blocks may be realized by any number of hardware and/or software components configured to perform the specified functions. For example, the invention may employ various integrated circuit components, e.g., memory elements, processing elements, logic elements, look-up tables, and the like, which may carry out a variety of functions under the control of one or more microprocessors or other control devices. Similarly, where the elements of the invention are implemented using software programming or software elements, the invention may be implemented with any programming or scripting language such as C, C++, JAVA®, assembler, or the like, with the various algorithms being implemented with any combination of data structures, objects, processes, routines or other programming elements. Functional aspects may be implemented in algorithms that execute on one or more processors. Furthermore, the invention may employ any number of conventional techniques for electronics configuration, signal processing and/or control, data processing and the like. Finally, the steps of all methods described herein may be performed in any suitable order unless otherwise indicated herein or otherwise clearly contradicted by context.

For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. The words "mechanism", "element", "unit", "structure", "device", "controller", "means", and "construction" are used broadly and are not limited to mechanical or physical embodiments, but may include software routines in conjunction with processors, etc.

The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those of ordinary skill in this art without departing from the spirit and scope of the invention as defined by the following claims. Therefore, the scope of the invention is defined not by the detailed description of the invention but by the following claims, and all differences within the scope will be construed as being included in the invention.

No item or component is essential to the practice of the invention unless the element is specifically described as "essential" or "critical". It will also be recognized that the terms "comprises," "comprising," "includes," "including," "has," and "having," as used herein, are specifically intended to be read as open-ended terms of art. The use of the terms "a" and "an" and "the" and similar referents in the context of describing the invention (especially in the context of the following claims) are to be construed to cover both the singular and the plural, unless the context clearly indicates otherwise. In addition, it should be understood that although the terms "first," "second," etc. may be used herein to describe various elements, these elements should not be limited by these terms, which are only used to distinguish one element from another. Furthermore, recitation of ranges of values herein are merely intended to serve as a shorthand method of referring individually to each separate value falling within the range, unless otherwise indicated herein, and each separate value is incorporated into the specification as if it were individually recited herein.

## Claims

1. A digital photographing apparatus comprising:

   a photographing unit that generates real-time photographed images from incident light;
   a live view generator that generates a live view image from the real-time photographed images; and
   a display unit that displays the live view image,
   wherein the live view generator
   determines a number of real-time photographed images to be
   combined, according to a set exposure time,
   combines the real-time photographed images of the determined
   number to generate the live view image, and
   combines latest real-time photographed images of the determined
   number, to update the live view image, whenever a real-time photographed image is input.

2. The digital photographing apparatus of claim 1, wherein the live view generator determines the number of real-time photographed images to be combined according to a frame rate of the live view image and the set exposure time.

3. The digital photographing apparatus of claim 1, further comprising a real-time image storage unit that stores a plurality of latest real-time photographed images.

4. The digital photographing apparatus of claim 1, wherein the live view generator performs an average combination of the real-time photographed images of the determined number to generate the live view image.

5. The digital photographing apparatus of claim 1, wherein the live view generator updates the number of real-time photographed images to be combined, when the set exposure time is changed.

6. The digital photographing apparatus of claim 1, further comprising an optical view finder that provides real-time images of incident light that is incident through a lens, an aperture, and a mirror, in an optical preview mode, wherein the live view generator provides the live view image in an exposure preview mode.

7. The digital photographing apparatus of claim 1, wherein the live view generator combines real-time photographed images that are currently stored, to generate the live view image, when the number of stored real-time photographed images is less than the determined number, and

combines the stored real-time photographed images, to update the live view image, whenever the real-time photographed image is input and until the number of stored real-time photographed images reaches the determined number.

8. A method of controlling a digital photographing apparatus, the method comprising:

determining a number of real-time photographed images to be combined, according to a set exposure time;
generating a live view image by combining the real-time photographed images of the determined number; and
updating the live view image by combining latest real-time photographed images of the determined number, whenever a real-time photographed image is input.

9. The method of claim 8, wherein the determining of the number of real-time photographed images to be combined is performed according to a frame rate of the live view image and the set exposure time.

10. The method of claim 8, further comprising storing a plurality of latest real-time photographed images.

11. The method of claim 8, wherein the generating of the live view image comprises performing an average combination of the real-time photographed images of the determined number.

12. The method of claim 8, further comprising updating the number of real-time photographed images to be combined, when the set exposure time is changed.

13. The method of claim 8, further comprising:

providing real-time images generated from incident light that is incident through a lens, an aperture, and a mirror on an optical view finder, in an optical preview mode; and
providing the live view image in an exposure preview mode.

14. The method of claim 8, further comprising:

generating the live view image by combining the real-time photographed images currently stored, if the number of the stored real-time photographed images is less than the determined number; and
updating the live view image by combining the stored real-time photographed images whenever a real-time photographed image is input, until the number of stored real-time photographed images reaches the determined number.

15. A non-transitory computer-readable recording medium having embodied thereon computer program codes for executing a method of controlling a digital photographing apparatus when being read and performed by a processor, the method comprising:

determining a number of real-time photographed images to be combined, according to a set exposure time;
generating a live view image by combining the real-time photographed images of the determined number; and
updating the live view image by combining latest real-time photographed images of the determined number, whenever a real-time photographed image is input.

# FIG. 1

# FIG. 2

$$F(1) = SUM \ [ \ f(1-n) : f(1) \ ]$$
$$F(2) = SUM \ [ \ f(2-n) : f(2) \ ]$$
$$F(3) = SUM \ [ \ f(m-n) : f(m) \ ]$$

# FIG. 3

EP 2 753 067 A1

# FIG. 4

## FIG. 5

START

DETERMINE NUMBER OF
REAL-TIME PHOTOGRAPHED
IMAGES TO BE COMBINED — S502

GENERATE LIVE VIEW IMAGE BY COMBINING
REAL-TIME PHOTOGRAPHED IMAGES — S504

UPDATE LIVE VIEW IMAGE — S506

END

## FIG. 6

START

IS SET
EXPOSURE TIME
CHANGED? — S602

NO

YES

RESET NUMBER OF
REAL-TIME PHOTOGRAPHED
IMAGES TO BE COMBINED — S604

GENERATE LIVE VIEW IMAGE BY COMBINING
REAL-TIME PHOTOGRAPHED IMAGES — S606

END

FIG. 7

FIG. 8

FIG. 9

FIG. 10

# FIG. 11

# EUROPEAN SEARCH REPORT

**Application Number**

EP 13 18 8376

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/229699 A1 (HAMAMURA TOSHIHIRO [JP] ET AL) 4 October 2007 (2007-10-04) * paragraphs [0072], [0076], [0080], [0060], [0050], [0052]; figure 5c * | 1-15 | INV. H04N5/235 H04N5/232 |
| X | US 2010/328494 A1 (KIM YOUNG-GEOL [KR]) 30 December 2010 (2010-12-30) * paragraphs [0055], [0058]; figure 3 * | 1,8,15 | |
| A | EP 2 109 307 B1 (SONY CORP [JP]) 3 August 2011 (2011-08-03) * paragraphs [0150], [0153], [0168]; figure 6 * | 4,11 | |
| A | US 2007/285527 A1 (KUSAYAMA TAKAYOSHI [JP] ET AL) 13 December 2007 (2007-12-13) * figure 5 * | 7,14 | |

TECHNICAL FIELDS SEARCHED (IPC)

H04N

The present search report has been drawn up for all claims

| Place of search | Date of completion of the search | Examiner |
|---|---|---|
| The Hague | 8 May 2014 | Bequet, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 18 8376

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2014

| Patent document cited in search report | | Publication date | Patent family member(s) | | Publication date |
|---|---|---|---|---|---|
| US 2007229699 | A1 | 04-10-2007 | CN | 101090459 A | 19-12-2007 |
| | | | JP | 4979969 B2 | 18-07-2012 |
| | | | JP | 2007281548 A | 25-10-2007 |
| | | | KR | 20070099394 A | 09-10-2007 |
| | | | US | 2007229699 A1 | 04-10-2007 |
| US 2010328494 | A1 | 30-12-2010 | KR | 20100138608 A | 31-12-2010 |
| | | | US | 2010328494 A1 | 30-12-2010 |
| EP 2109307 | B1 | 03-08-2011 | CN | 101557468 A | 14-10-2009 |
| | | | EP | 2109307 A1 | 14-10-2009 |
| | | | JP | 4544332 B2 | 15-09-2010 |
| | | | JP | 2009253690 A | 29-10-2009 |
| | | | TW | 201004320 A | 16-01-2010 |
| | | | US | 2009262218 A1 | 22-10-2009 |
| US 2007285527 | A1 | 13-12-2007 | CN | 101072300 A | 14-11-2007 |
| | | | JP | 2007306106 A | 22-11-2007 |
| | | | KR | 20070109875 A | 15-11-2007 |
| | | | TW | 200803476 A | 01-01-2008 |
| | | | US | 2007285527 A1 | 13-12-2007 |

EPO FORM P0459

For more details about this annex : see Official Journal of the European Patent Office, No. 12/82

**EP 2 753 067 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130001216